# EUROPÄISCHE PATENTANMELDUNG

(11) **EP 2 500 635 A2**
(43) Veröffentlichungstag der Anmeldung: **19.09.2012**
(21) Anmeldenummer: 12160113.2
(22) Anmeldetag: 19.03.2012
(51) Int. Cl.: F21V 19/04, F21V 21/29, F21V 21/30, F21S 8/06, F21Y 105/00

(54) **Wartungsfreundliche Halterung für organische Leuchtdiden**

(30) Priorität: 18.03.2011 DE 102011005808
(71) Anmelder: Trilux GmbH & Co. KG, 59759 Arnsberg (DE)
(72) Erfinder: Rudolph, Horst, 59067 Hamm (DE); Ludwig, Sebastian, 50735 Köln (DE)
(74) Vertreter: Lippert, Stachow & Partner

(57) **Zusammenfassung**

Bei bekannten Leuchten mit starren flächigen organischen Leuchtdioden (OLED) ist die Wartung, insbesondere der Ersatz und der Austausch des Leuchtmittels nur schwer möglich. Es wird eine neue Halterung für solche OLED vorgeschlagen, welche einen Bügel mit einer Nut, die den Rand der OLED aufnehmen kann, umfasst, wobei sich an mindestens einem Ende dieser Nut ein zwischen zwei Positionen verschiebbares Halteelement befindet und die Länge des Bügels so bemessen ist, dass die Öffnung des Bügels kleiner als ein kleinster Durchmesser der OLED ist, wenn das Halteelement in der ersten Position ist, und größer oder gleich einem kleinsten Durchmesser der OLED ist, wenn das Halteelement in der zweiten Position ist.

## Beschreibung

Die Erfindung betrifft eine Halterung für organische Leuchtdioden (OLED), welche die Wartung von Leuchten mit OLED vereinfacht.

Organische Leuchtdioden sind seit einiger Zeit bekannt. Anders als die herkömmlichen LED können sie grundsätzlich mit beliebig großer Fläche hergestellt werden. Man unterscheidet transparente und intransparente OLED, je nachdem, ob der Träger und beide Elektroden lichtdurchlässig sind oder nur eine transparente Elektrode vorliegt. Während transparente OLED Licht in beide von ihnen definierten Halbräume abstrahlen, leuchten intransparente OLED nur in einem Halbraum, wobei die intransparente Schicht zur Verbesserung der Lichtausbeute verspiegelt sein kann. Ein OLED-Leuchtmittel wurde kürzlich von Osram unter der Bezeichnung Orbeos zusammen mit einer Leuchte mit dem Namen PirOLED auf den Markt gebracht (http://www.osram-os.com/osram_os/EN/Press/Press_Releases/Organic_LED/documents/P M_OSRAM_OLED_ORBEOS_dt.pdf und http://www.osram.com/osram_com/LED/OLED_Lighting/PirOLED/index. html, aufgerufen am 16.12.2010). Es handelt sich bei Orbeos um eine intransparente OLED mit verspiegeltem Träger, die achteckig ist, eine kreisförmige Leuchtfläche aufweist und in kreisförmige Halterungen der Leuchte eingebaut ist.

Eine Entwicklungsrichtung geht dahin, ähnlich wie bei Leuchten für herkömmliche Leuchtmittel solche Leuchten zu schaffen, die mit austauschbaren standardisierten OLED-Bauteilen bestückt werden. Dabei sollte es möglich sein, defekte OLED rasch zu ersetzen oder auch OLED Leuchtmittel gegen andere auszutauschen, um bestimmte Beleuchtungseffekte zu erzielen. Besonders wichtig ist dies im Hinblick auf die noch begrenzte Lebensdauer der verfügbaren OLED.

Die Erfindung stellt sich daher die Aufgabe, eine Halterung für OLED-Leuchtmitteln vorzuschlagen, wobei die Wartung, insbesondere der Ein- und Ausbau des Leuchtmittels, leicht möglich ist. Dabei soll die Funktionalität und die Gestaltungsfreiheit gewahrt bleiben.

Diese Aufgabe wird durch eine Halterung nach dem Hauptanspruch gelöst.

Die erfindungsgemäße Halterung kann eine OLED so aufnehmen, dass sie nur am Rand gehalten wird und beide Flächen frei bleiben. Daher ist sie für transparente wie auch intransparente OLED gleichermaßen geeignet. Zweckmäßig umfasst der Bügel mindestens den halben Umfang der OLED. Wenn die OLED in der ersten Position des Halteelementes in die Nut des Bügels eingelegt ist, kann sie nicht ohne Verschiebung des Halteelementes in die zweite Position aus der Nut herausgenommen werden. Diese Verschiebung kann entweder direkt am Halteelement oder mittelbar durch die OLED beim Einschieben bzw. Herausziehen erfolgen.

OLEDs sind in unterschiedlichen Graden der Entwicklung erhältlich. Die einfache OLED, direkt aus der Maschine mit spiegelndem Off-State (ausgeschalteter Zustand) und auch in Verbindung mit einer Auskoppelfolie und diffusem Off-State wird einfaches "Panel" genannt. Dieses kann man um angeschlossene Leitungen ergänzen; das Panel mit den elektrischen Verbindungen, mit Rahmen oder anderen Gehäusen oder Halterungen verbunden, wird im Markt häufig je nach Integrationsstufe "Modul" genannt. Die höchste Integrationsstufe kann Elektronik zur Konstant-StromRegelung umfassen. Da sich durch die OLED-Eigenschaften ein breites Gestaltungsspektrum der Leuchte eröffnet, insbesondere durch die Erfindung realisierte Kombination von OLED und Halterung, ist eine einfache Auswechselbarkeit und insbesondere eine einfache Wartung der empfindlichen OLEDs enorm wichtig. Mit der vorgeschlagenen Halterung kann der Nutzer ein einfaches Panel, ohne elektrische Verbindungen oder anderweitige Ergänzungen direkt in Funktion bringen und dieses ebenso leicht austauschen im Falle eines Defekts oder einer Änderung der Eigenschaft (z.B.: Off-State). Somit wird quasi eine "Plug&Play" Lösung realisiert und der Benutzer ist im Schadensfall nicht gezwungen, das komplette Module und die damit verbundenen weiteren Bestandteile zu tauschen. Bei der bevorzugten Ausführungsform kommt die Halterung ohne die Anbindung von elektrischen Kontakten oder Leitungen aus, weil diese integriert sind über Reibkontakte, so dass für den Austausch oder Wartungsfall keine Fachkräfte erforderlich sind.

Für den Zweck dieser Beschreibung gilt als Durchmesser eine Gerade, welche durch den Mittel- bzw. Schwerpunkt der von der OLED dargestellten Figur verläuft. Während beispielsweise bei kreisförmigen OLED jeder Durchmesser die gleiche Länge hat, kann man bei Quadraten einen größten (Diagonale) und einen kleinsten (Seitenhalbierende) Durchmesser erkennen, bei Ellipsen entsprechend die Haupt- und die Nebenachse usw.

Als Halteelement kommen beispielsweise radial in dem Bügel von außen eingeschraubte Madenschrauben in Betracht. Auch Hebel, die beispielsweise durch Reibung oder durch Federkraft in einer oder in beiden Positionen gehalten werden können, kommen in Betracht. Bevorzugt werden elastisch verformbare Halteelemente. Dabei kann der Bügel selbst als Halteelement wirken, wenn er aus einem elastischen Material besteht und aus der ersten Position, in der er die OLED festhält, elastisch in die zweite Position aufgeweitet werden kann. Das Material für einen solchen Bügel kann beispielsweise ein thermoplastisches oder duroplastisches Elastomer, ein geeignetes Metall wie Federstahl oder Edelstahl oder ein elastisches Verbundmaterial sein. Die Materialeigenschaften und die Abmessungen sind so einzustellen, dass die zum Aufweiten des Bügels aufzuwendende Kraft groß genug ist, um die OLED sicher zu halten, aber eine leichte Entnahme mit der Hand ermöglicht. Alternativ kann der Bügel auch mit einem federnden Gelenk versehen sein. Die Aufweitung des Bügels für das Einsetzen oder Entnehmen der OLED kann dann einfach durch leichten Druck auf diese in Richtung der Ebene des Bügels erfolgen.

Die erfindungsgemäße Halterung eignet sich insbesondere für OLED mit einer gewissen Steifigkeit, z. B. mit Trägern, Rahmen oder Substraten aus Glas, Metall, steifem Kunststoff.

Weiter bevorzugt können auch federnde Elemente, beispielsweise Blattfedern, gegebenenfalls mit Nocken versehen, in die Nut eingelegt und dort befestigt werden. Dabei kann das Einsetzen oder Entnehmen der OLED auf dieselbe Weise erfolgen wie beim elastischen Bügel oben beschrieben.

Zur Versorgung der OLED mit Strom kann der Bügel, bevorzugt in der Nut, Kontaktelemente aufweisen, die mit Kontakten am Umfang der OLED zusammenwirken können. Vorteilhaft sind dies die beschriebenen federnden Elemente.

Diese federnden Elemente können aus leitfähigem Material wie Metall bestehen und mit einer Stromquelle verbunden sein. Dabei muss selbstverständlich der Bügel aus einem elektrisch isolierenden Material bestehen oder gegen die federnden Elemente isoliert sein.

Die erfindungsgemäße Halterung kann vorzugsweise mit Mitteln versehen sein, die eine Befestigung an einer Fläche, beispielsweise einer Wand, einer Decke oder der Oberfläche eines Leuchtengrundkörpers, ermöglichen. Dies können beispielsweise Elemente einer Schraubverbindung wie Gewindezapfen oder -Hülsen, Laschen zum Ankleben oder Anschrauben oder dergleichen sein. Mit Hilfe solcher Mittel können komplexe Leuchten mit mehreren OLED aufgebaut oder auch die OLED an einer Wand oder Decke zu Beleuchtungszwecken befestigt werden. Zweckmäßig umfassen diese Mittel des weiteren Gelenkverbindungen, wie Dreh-, Schub- und/oder Kugelgelenke, so dass die Lage einer an einer Wand befestigten Halterung mit OLED nach Wunsch des Benutzers verändert werden kann. Solche Gelenkverbindungen können auch mehrfach kombiniert, beispielsweise nach Art einer kardanischen Aufhängung, vorgesehen sein.

Die Mittel zur Versorgung der OLED mit Strom, wie Vorschaltgeräte mit Transformatoren, Gleichrichtern und Strombegrenzern, können in üblicher Weise im Leuchtengrundkörper oder in der Wand- oder Deckenfläche untergebracht sein. Es ist auch möglich, sie in der Halterung selbst anzubringen.

Zur Realisierung besonderer ästhetischer Effekte und Beleuchtungswirkungen kann die erfindungsmäße Halterung weitere Leuchtmittel, beispielsweise LED, aufweisen. Diese können am Bügel angebracht sein. Es ist auch möglich, den Bügel hohl und aus transparentem Material herzustellen und die weiteren Leuchtmittel im Inneren des Hohlraums anzubringen.

Die erfindungsgemäße Halterung kann für OLED unterschiedlicher Gestalt ausgelegt werden, beispielsweise für kreisförmige oder elliptische OLED oder solche in Form regelmäßiger Sechs- oder Achtecke. Im Fall des regelmäßigen Sechs- oder Achtecks ist als kleinster Durchmesser der Abstand paralleler Seiten einzusetzen. Vorteilhaft ist der Bügel dann so groß, dass er mehr als die Hälfte der Ecken umgreift. Bevorzugt erhält der Bügel die Form der aufzunehmenden OLED, also beispielsweise angenähert eines Halbkreises oder einer halben Ellipse. In diesem Fall kann die OLED auf der ganzen Länge der Nut mit dem Rand in dieser liegen. Es ist aber auch möglich, beispielsweise eine achteckige OLED in einen halbkreisförmigen Bügel oder eine kreisförmige OLED in einen Bügel mit der Form eines angenähert halben Sechsecks einzulegen, wobei die OLED dann nur mit Teilen des Randes gehalten wird.

Weil die erfindungsgemäße Halterung keine vollflächigen Träger- oder Stützelemente aufweist, können leicht transparente gegen intransparente OLED ausgewechselt werden, wenn dies gewünscht wird.

Die Erfindung wird nun beigegebenen Zeichnungen näher erläutert. Es zeigen:
- Figur 1: eine erfindungsgemäße Halterung mit eingesetzter achteckiger OLED und einem längs geschnittenen Detail des Bügelendes;
- Figur 2: eine zweite Ausführungsform der erfindungsgemäßen Halterung mit kreisförmiger OLED und Drehmöglichkeit um zwei Achsen; und
- Figur 3: eine weitere Ausführungsform der erfindungsgemäßen Halterung mit kreisförmiger OLED und einem längs geschnittenen Detail des Bügelendes,

Figur 4 eine Hängeleuchte mit 6 OLED in Halterungen gemäß Figur 3.

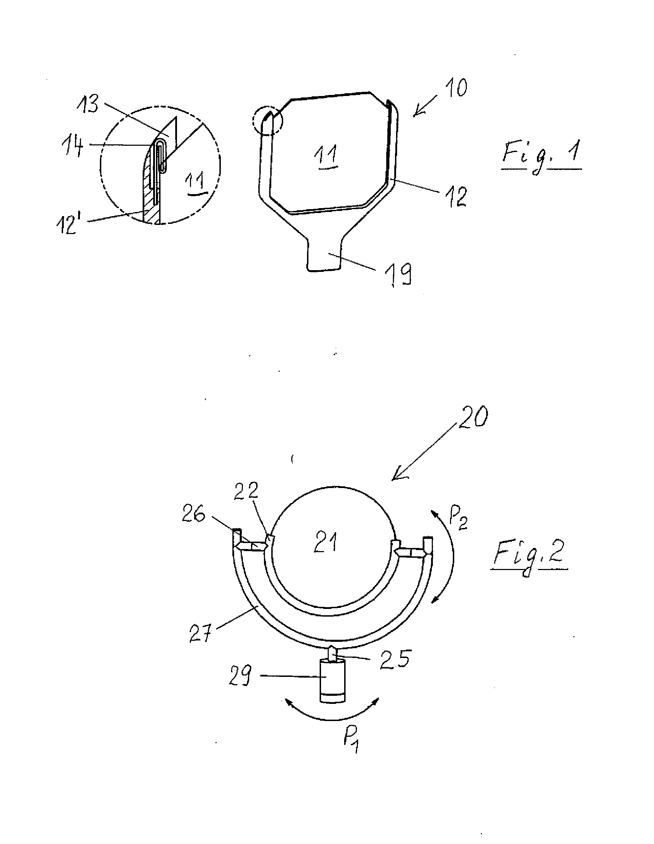

Figur 1 zeigt eine erfindungsgemäße Halterung 10 nach einer ersten Ausführungsform mit einer eingesetzten OLED 11. Die Halterung umfasst einen Bügel 12, der an den achteckigen Umfang der OLED angepasst ist und sechs der acht Ecken der OLED umgreift. In der Mitte des Bügels 12 ist ein nach außen weisender Fortsatz 19 angebracht, der dazu dient, die Halterung mit hier nicht gezeigten Befestigungsmitteln wie Schrauben oder Klebstoff an einer Fläche zu befestigen. Im gezeigten Detail des Bügelendes 12' erkennt man die Nut 13, in der der Rand der OLED 11 ruht. Die Feder 14 ist im Ende 12' des Bügels befestigt und hält die Ecke der OLED 11 fest. Wie man sieht, kann beim Herausziehen der OLED 11 die Feder 14 in der Nut 13 soweit nach außen ausweichen, dass die OLED 11 passieren kann.

Bei der in Figur 2 gezeigten Ausführungsform der erfindungsgemäßen Halterung wird die kreisförmige OLED 21 im Bügel 22 gehalten, der hier aus einem elastischen Material besteht und einem Kreisbogen von etwa 190° folgt. Dadurch ist der Abstand zwischen den Enden des Bügels 22 in der gezeigten ersten Position etwas kleiner als der Durchmesser der OLED 21. Zieht man die OLED 21 aus dem Bügel heraus, dann weitet sich der Bügel 22 in die zweite Position auf und der Rand der OLED 21 kann über die Enden der Nut im Bügel 22 gleiten. Der Bügel 22 ist seinerseits über Drehgelenke 26 mit einem zweiten Bügel 27 verbunden, der wiederum über ein weiteres Drehgelenk 25 mit einem Sockel 29 verbunden ist. Dieser Sockel 29 kann nun zum Befestigungen an einer Fläche dienen. Durch das Drehgelenk 25 kann die Halterung also in der durch den Pfeil P1 beschriebenen Richtung gedreht werden, während die Drehgelenke 26 eine Drehung in der durch den Pfeil P2 angedeuteten Richtung ermöglichen. Im Sockel 29 können Betriebsgeräte für die OLED untergebracht werden, wobei die Stromzufuhr zum Bügel 22 und damit zur OLED 21 über Schleifkontakte in den Drehgelenken 25 und 26 erfolgt.

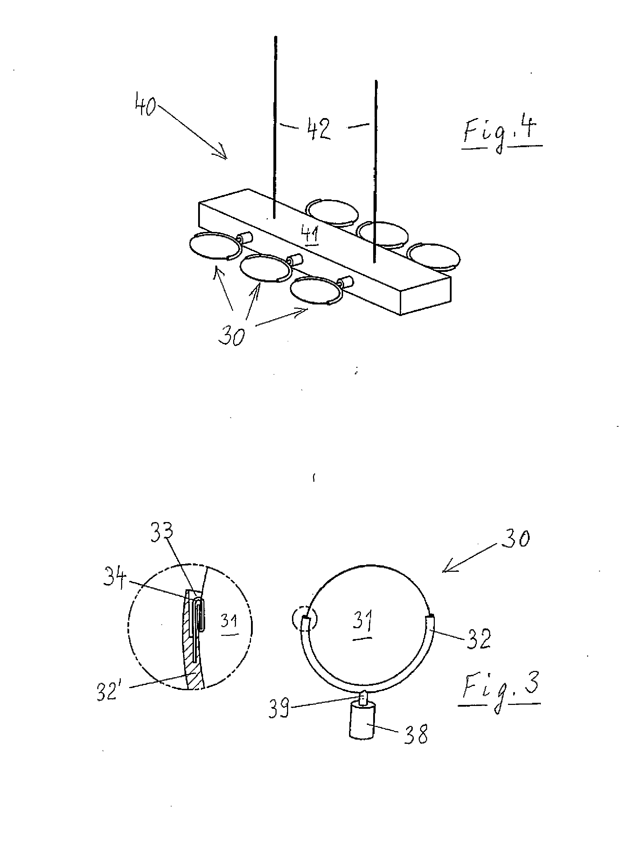

Figur 3 zeigt eine weitere Ausführungsform der erfindungsgemäßen Halterung mit einem Bügel 32, in dessen Nut 33 eine OLED 31 gehalten wird. In diesem Falle besteht der Bügel 32 aus einem unelastischen Material und weist an mindestens einem Ende 32' eine Feder 34 auf. Die Wirkungsweise dieser Feder ist ähnlich der bei Figur 1 besprochenen Feder. Der Bügel 32 ist über den Fortsatz 39 an einem Sockel 38 befestigt, welcher die Betriebsgeräte für die OLED enthält und auf einer Wand befestigt werden kann.

In Figur 4 ist eine komplex aufgebaute Hängeleuchte 40 dargestellt. Diese umfasst einen Leuchtengrundkörper 41, der über eine Aufhängung 42 an der Decke befestigt werden kann. An den Seitenflächen des Leuchtengrundkörpers 41 sind Halterungen 30 gemäß Figur 3 angebracht. Eine solche Leuchte kann beispielsweise mit intransparenten OLED, die nur nach unten strahlen, ausgerüstet werden. Es auch möglich, die Halterungen 30 so zu gestalten, dass der Fortsatz 39 im Sockel 38 drehbar ist.

### Bezugszeichenliste

- 0, 20, 30: Halterung
- 11, 21, 31: OLED
- 12, 22, 32: Bügel
- 12', 32': Bügelenden
- 13, 33: Nut
- 14, 34: Feder
- 25, 26: Drehgelenke
- 27: zweiter Büge
- 29, 38: Sockel
- 19, 39: Fortsatz
- 40: Hängeleuchte
- 41: Leuchtengrundkörper
- P1, P2: Drehrichtung der Drehgelenke 25 bzw. 26

## Patentansprüche

1. Halterung (0; 20; 30) für eine starre flächig ausgedehnte organische Leuchtdiode (11; 21; 31) mit einem Umfang und einem Rand, umfassend einen Bügel (12 ,22 ,32) mit einer Nut (13, 33), welche den Rand der OLED (11; 21; 31) aufnehmen kann, auf dessen Innenseite, und mindestens ein zwischen zwei Positionen verschiebbares Halteelement an mindestens einem Ende dieser Nut (13, 33), wobei die Länge des Bügels (12, 22, 32) so bemessen ist, dass die Öffnung des Bügels (12 ,22 ,32) kleiner als ein kleinster Durchmesser der OLED (11; 21; 31) ist, wenn das Halteelement in der ersten Position ist, und größer oder gleich einem kleinsten Durchmesser der OLED (11; 21; 31) ist, wenn das Halteelement in der zweiten Position ist.

2. Halterung (0; 20; 30) nach Anspruch 1, **dadurch gekennzeichnet, dass** der Bügel elastisch aufgeweitet werden kann und selbst auch das Halteelement bildet.

3. Halterung (0; 20; 30) nach Anspruch 1, **dadurch gekennzeichnet, dass** sie als Halteelement mindestens ein an mindestens einem Ende des Bügels (12, 22, 32) in der Nut festgelegtes federndes Element umfasst.

4. Halterung (0; 20; 30) nach Anspruch 1 bis 3, **dadurch gekennzeichnet, dass** der Bügel (12 ,22 ,32) an den Umfang einer kreisrunden, elliptischen, sechseckigen oder achteckigen OLED (11; 21; 31)angepasst ist.

5. Halterung (0; 20; 30) nach einem der Ansprüche 1 bis 4, **dadurch gekennzeichnet, dass** der Bügel Kontaktelemente aufweist, die zur Stromversorgung mit Kontakten an der OLED (11; 21; 31) zusammenwirken können.

6. Halterung (0; 20; 30) nach Anspruch 5, **dadurch gekennzeichnet, dass** die Kontaktelemente elektrisch leitende federnde Halteelemente an den Enden der Nut sind.

7. Halterung (0; 20; 30) nach einem der vorangehenden Ansprüche, **dadurch gekennzeichnet, dass** sie Mittel zur Befestigung an einer Fläche aufweist.

8. Halterung (0; 20; 30) nach einem der vorangehenden Ansprüche, **dadurch gekennzeichnet, dass** sie weitere Leuchtmittel neben der aufzunehmenden OLED (11; 21; 31) aufweist.
